# EUROPÄISCHE PATENTANMELDUNG

(11) **EP 1 108 992 A1**
(43) Veröffentlichungstag der Anmeldung: **20.06.2001**
(21) Anmeldenummer: 00123508.4
(22) Anmeldetag: 27.10.2000
(51) Int. Cl.: G01F 23/00

(54) **Verfahren zum Betrieb eines Füllstandmessgerätes und Füllstandmessgerät**

(30) Priorität: 17.12.1999 DE 19961157
(71) Anmelder: VEGA Grieshaber KG, 77709 Wolfach (DE)
(72) Erfinder: Auber, Herbert, Dipl.-Ing. (FH), 78713 Schramberg (DE); Mellert, Martin, Dipl.-Ing. (FH), 77790 Steinach (DE)
(74) Vertreter: Patentanwälte Westphal, Mussgnug & Partner

(57) **Zusammenfassung**

Um bei einem Füllstandmeßgerät, bei dem ein Meßwandler (MW) mit einer elektronischen Auswerteeinrichtung (EA) verbunden ist, die Meßgenauigkeit zu erhöhen, den Explosionsschutz zu verbessern und gleichzeitig den Aufbau des Füllstandmeßgerätes zu vereinfachen, sind der Meßwertwandler (MW) und die elektronische Auswerteeinrichtung (EA) galvanisch voneinander getrennt. Der Meßwertwandler (MW) und die elektronische Auswerteeinrichtung (EA) können z. B. über eine Lichtleiterfaser (LL) mit Optokopplern (OK) an ihren beiden Enden miteinander verbunden sein.

## Beschreibung

Die Erfindung betrifft weiter ein Füllstandmeßgerät, und ein Verfahren zum Betrieb eines solchen Füllstandmeßgerätes.

Bei der Füllstandsmessung werden die von einem Meßsensor erzeugten Meßwerte zu einem Meßwertwandler gesendet, der sie z. B. in digitale Daten wandelt und zu einer elektronischen Auswerteeinrichtung sendet. Vor Inbetriebnahme des Füllstandsmeßgerätes sind kundenspezifische Parametrierdaten in das Füllstandsmeßgerät einzugeben. Bei Austausch des Meßwertwandlers oder der elektronischen Auswerteeinrichtung sind diese Parametrierdaten erneut in das Füllstandmeßgerät einzugeben, was einen unerwünschten Aufwand darstellt.

Zur Füllstandmessung festen Schüttgutes oder von Flüssigkeiten in einem Behälter oder Tank sind mehrere Meßprinzipien bekannt. Als Beispiele wird auf die Füllstandmessung mit Radar, mittels Schwingstäben, mittels Druck und mittels Kapazitätsmessung verwiesen.

Bei den verschiedenen Meßverfahren ist jeweils ein Meßsensor an einen Meßwertwandler angeschlossen. Dieser gemeinsame Anschluß am Meßwertwandler und am Meßsensor wird als Prozeßanschluß bezeichnet. An diesem sind die elektrischen Versorgungsleitungen und die elektrischen Meßleitungen des Meßsensors mit denen des Meßwertwandlers verbunden. Im Betrieb kann es am Meßsensor zu Spannungsüberschlägen kommen, die Teile des Meßsensors oder der elektrischen Auswerteeinrichtung zerstören. Außerdem können auf den Versorgungsleitungen Überspannungen gegenüber Masse oder Erde auftreten.

Bei Einsatz in explosionsgefährdeten Bereichen sind zusätzliche Vorsichtsmaßnahmen, wie z. B. Mindestabstände der elektrischen Leitungen untereinander und zum Prozeßanschluß vorgeschrieben, um einen sicheren Schutz vor Explosionen zu gewährleisten.

Ziel der Erfindung ist, ein Verfahren zum Messen des Füllstandes mittels eines Füllstandmeßgerätes sowie ein Füllstandmeßgerät so zu gestalten, dass der Einfluß von äußeren Störgrößen auf das Meßergebnis verringert und die Meßgenauigkeit erhöht wird. Außerdem soll ein sicherer Explosionsschutz erzielt sein.

Die Erfindung löst diese Aufgabe verfahrensmäßig mit den im Anspruch 1 angegebenen Verfahrensschritten dadurch, dass die Datenübertragung zwischen dem Meßwertwandler und der elektronischen Auswerteeinrichtung auf einem galvanisch vom Meßwertwandler und von der elektronischen Auswerteeinrichtung getrennten Übertragungsweg erfolgt.

Die Erfindung löst diese Aufgabe vorrichtungsmäßig mit den im Anspruch 8 angegebenen Merkmalen dadurch, dass der Meßwertwandler und die elektronische Auswerteeinrichtung galvanisch voneinander getrennt sind.

Erfindungsgemäß sind der Meßwertwandler und die elektronische Auswerteeinrichtung galvanisch voneinander getrennt. Sie können beispielsweise über einen Übertrager oder mittels einer Lichtfaserleitung, an deren Enden jeweils ein Optokoppler angeordnet ist, miteinander verbunden sein.

Durch die galvanische Trennung des Meßwertwandlers von der elektronischen Auswerteeinheit wird eine Reihe von Vorteilen erzielt, die nachfolgend erläutert werden.

Die Versorgungsleitungen, auf denen üblicherweise Versorgungsströme zwischen 4 und 20mA fließen, sind vor Überspannungen und Überschlägen gegenüber Masse oder Erde geschützt, denn vom Prozeßanschluß zum Meßsensor kann kein Spannungsüberschlag mehr auftreten, weil die Elektronik des Meßsensors unmittelbar mit Masse oder Erde verbunden werden kann.

Bevorzugt werden kapazitive Meßsensoren aus Keramik zur Füllstandsmessung eingesetzt. Jedoch weisen kapazitive Meßsensoren aus Keramik parasitäre Streukapazitäten von der Meßkapazität einerseits und von der Referenzkapazität andererseits auf das Gehäuse auf, die durch kaum vermeidbare Einkopplung von Störungen auf den Leitungen, insbesondere im niederfrequenten Bereich, einen relativen Meßfehler von bis zu 50% verursachen können. Durch die erfindungsgemäße galvanische Trennung wird dieser Meßfehler in vorteilhafter Weise vollständig eliminiert.

In explosionsgefährdeten Bereichen sind Mindestabstände der Versorgungsleitungen untereinander und zum Prozeßanschluß vorgeschrieben. Durch die erfindungsgemäße galvanische Trennung kann der Meßsensor auf einfache Weise in einen Prozeßanschluß aus Metall eingebaut sein. Besonders einfach gestaltet sich der Einbau eines Meßsensors mit einer Membranelektrode, denn wegen der galvanischen Entkopplung kann die Membranelektrode mit dem metallischen Prozeßanschluß elektrisch verbunden werden. Es sind daher keinerlei Sicherheitsabstände aus Gründen des Explosionsschutzes zwischen dem Prozeßanschluß und dem Meßwertwandler vorzusehen.

Schließlich wird wegen der galvanischen Trennung das Meßergebnis nicht mehr durch gegenseitige Einkopplungen zwischen dem Meßwertwandler und der elektronischen Auswerteeinrichtung verfälscht. Das Signal-Rausch-Verhältnis wird durch die galvanische Trennung erheblich verbessert.

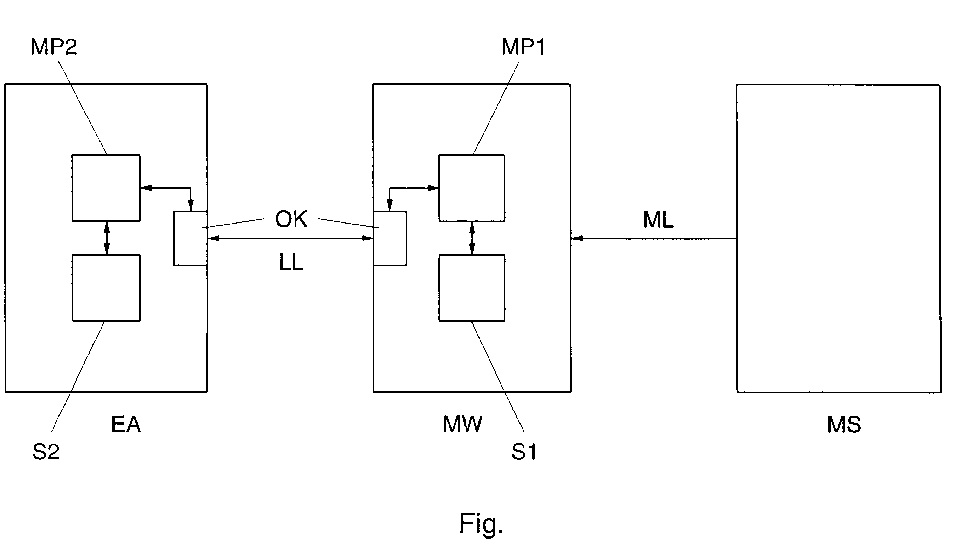

Anhand eines in der Figur gezeigten Ausführungsbeispieles eines erfindungsgemäßen Füllstandmeßgerätes wird die Erfindung nachfolgend näher erläutert.

Bei dem in der Figur abgebildeten Füllstandmeßgerät ist ein Meßsensor MS am Meßort angeordnet und mißt den Füllstand beispielsweise in einem Behälter oder einem Tank. Über eine Meßleitung ML ist der Meßsensor MS mit einem Meßwertwandler MW verbunden, der meist in der Nähe des Meßsensors MS angeordnet ist. Über eine Leitung LL ist der Meßwertwandler MW mit einer elektronischen Auswerteeinrichtung EA verbunden. Der Meßsensor MS sendet die von ihm gemessenen Meßwerte an den Meßwertwandler MW, der sie z. B. in digitale Daten wandelt und zur elektronischen Auswerteeinrichtung EA weiterleitet.

Im Meßwertwandler MW ist ein Mikroprozessor MP1 mit einem nichtflüchtigen Speicher S1 und mit einem Optokoppler OK verbunden. Ebenso ist in der elektronischen Auswerteeinrichtung EA ein Mikroprozessor MP2 mit einem nichtflüchtigen Speicher S2 und mit einem Optokoppler OK verbunden. Die beiden Optokoppler OK sind über die Leitung LL, die als Lichtfaserleitung ausgebildet sein kann, miteinander verbunden. Neben der Datenübertragung ist auch die Übertragung der Versorgungsspannung galvanisch entkoppelt.

Anstelle zweier Optokoppler und einer Lichtfaserleitung kann zwischen dem Meßwertwandler MW und der elektronischen Auswerteeinrichtung EA ein induktiver Übertrager oder eine kapazitive Koppeleinrichtung vorgesehen sein.

Bei der Installation und der Erstinbetriebnahme des in der Figur abgebildeten Füllstandsmeßgerätes werden kundenspezifische Parametrierdaten zumindest in einen der beiden nichtflüchtigen Speicher eingegeben. Sie werden dann anschließend automatisch in den anderen nichtflüchtigen Speicher geschrieben, können aber auch gleichzeitig in beide nichtflüchtige Speicher eingegeben werden.

Bei Austausch des Meßwertwandlers MW werden nach Einsetzen des neuen Meßwertwandlers die im nichtflüchtigen Speicher S2 der elektronischen Auswerteeinrichtung EA stehenden Daten automatisch über die Leitung LL in den nichtflüchtigen Speicher S1 des neu eingesetzten Meßwertwandlers MW gelesen. Analog dazu werden bei Austausch der elektronischen Auswerteeinrichtung EA nach Einsetzen der neuen elektronischen Auswerteeinrichtung die im nichtflüchtigen Speicher S1 des Meßwertwandlers MW stehenden Daten automatisch über die Leitung LL in den nichtflüchtigen Speicher S2 der elektronischen Auswerteeinrichtung EA gelesen. Sowohl nach Austausch des Meßwertwandlers MW oder der elektronischen Auswerteeinrichtung EA stehen nach Einsetzen des neuen Gerätes die bereits zuvor gespeicherten redundanten Parametrierdaten wieder in beiden Speichern.

Die Datenübertragung zwischen dem Meßwertwandler MW und der elektronischen Auswerteeinrichtung EA kann z. B. vorzugsweise asynchron seriell erfolgen.

Weil die für die Inbetriebnahme und den Betrieb des erfindungsgemäßen Füllstandsmeßgerätes erforderlichen Parametrierdaten redundant sowohl im Meßwertwandler MW als auch in der elektronischen Auswerteeinrichtung EA gespeichert sind, brauchen sie bei Austausch eines dieser beiden Geräte oder beider Geräte nicht mehr erneut vom Wartungspersonal eingegeben zu werden. Die Wartung und die Reparatur des in der Figur gezeigten Füllstandmeßgerätes wird dadurch erheblich verkürzt und somit auch verbilligt. Der Austausch des Meßwertwandlers und der elektronischen Auswerteeinrichtung kann bei laufender Anlage erfolgen. Durch die erfinderische Maßnahme, den Meßwertwertwandler und die elektronische Auswerteeinrichtung galvanisch voneinander zu trennen, werden die Meßgenauigkeit und der Explosionsschutz erhöht, während sich gleichzeitig der Aufbau des erfindungsgemäßen Füllstandmeßgerätes vereinfacht.

Durch das redundante Speichern der zum Betrieb des Füllstandsmeßgerätes erforderlichen Parametrierdaten in einem nichtflüchtigen Speicher im Meßwertwandler und in einem weiteren nichtflüchtigen Speicher in der elektronischen Auswerteeinrichtung werden Wartungs- und Reparaturarbeiten bedeutend verkürzt und somit auch verbilligt.

### Bezugszeichenliste

- EA: elektronische Auswerteeinrichtung
- ML: Meßleitung
- MP1: Mikroprozessor
- MP2: Mikroprozessor
- MS: Meßsensor
- MW: Meßwertwandler
- LL: Lichtleiterfaser
- OK: Optokoppler
- S1: nichtflüchtiger Speicher
- S2: nichtflüchtiger Speicher

## Patentansprüche

1. Verfahren zum Messen des Füllstandes mittels eines Füllstandmeßgerätes, bei dem ein Meßsensor (MS) mit einer Auswerteeinrichtung (EA) aufweisenden Meßwertwandler (MW) verbunden ist, wobei der Meßwertwandler (MW) die vom Meßsensor (MS) empfangenen Meßwerte in digitale Daten wandelt und zur elektronischen Auswerteeinrichtung (EA) sendet,
**dadurch gekennzeichnet**, dass der Meßwertwandler (MW) und die elektronische Auswerteeinrichtung (EA) galvanisch voneinander getrennt sind.

2. Verfahren nach Anspruch 1,
**dadurch gekennzeichnet**, dass die Datenübertragung und/oder die Übertragung der Versorgungsspannung zwischen dem Meßwertwandler (MW) und der elektronischen Auswerteeinrichtung (EA) über eine Lichtleiterfaser (LL) erfolgt, an deren Enden jeweils ein Optokoppler (OK) vorgesehen ist.

3. Verfahren nach Anspruch 1 oder 2,
**dadurch gekennzeichnet**, dass die Datenübertragung und/oder die Übertragung der Versorgungsspannung zwischen dem Meßwertwandler (WM) und der elektronischen Auswerteeinrichtung (EA) induktiv oder kapazitiv erfolgt.

4. Verfahren nach Anspruch 1, 2 oder 3,
**dadurch gekennzeichnet**, dass im Meßwertwandler (MW) ein erster nichtflüchtiger Speicher (S1) und in der elektronischen Auswerteeinrichtung (EA) ein zweiter nichtflüchtiger Speicher (S2) vorgesehen sind und dass in den beiden Speichern (S1, S2) dieselben Kalibrierdaten redundant gespeichert werden.

5. Verfahren nach Anspruch 4,
**dadurch gekennzeichnet**, dass bei Austausch des Meßwertwandlers (MW) die im zweiten nichtflüchtigen Speicher (S2) der elektronischen Auswerteeinrichtung (EA) gespeicherten Daten automatisch in den ersten nichtflüchtigen Speicher (S1) des neu eingesetzten Meßwertwandlers (MW) gelesen werden.

6. Verfahren nach Anspruch 4 oder 5,
**dadurch gekennzeichnet**, dass bei Austausch der elektronischen Auswerteeinrichtung (EA) die im ersten nichtflüchtigen Speicher (S1) des Meßwertwandlers (MW) gespeicherten Daten automatisch in den zweiten nichtflüchtigen Speicher (S2) der neu eingesetzten elektronischen Auswerteeinrichtung (EA) gelesen werden.

7. Verfahren nach Anspruch 4, 5 oder 6,
**dadurch gekennzeichnet**, dass die Datenübertragung zwischen dem Meßwertwandler (MW) und der elektronischen Auswerteeinrichtung (EA) asynchron seriell erfolgt.

8. Füllstandmeßgerät, bei dem ein Meßsensor (MS) mit einem eine elektronische Auswerteeinrichtung (EA) aufweisenden Meßwertwandler (MW) verbunden ist,
**dadurch gekennzeichnet**, dass der Meßwertwandler (MW) und die elektronische Auswerteeinrichtung (EA) galvanisch voneinander getrennt sind.

9. Füllstandmeßgerät nach Anspruch 8,
**dadurch gekennzeichnet**, dass der Meßwertwandler (MW) über eine Lichtleiterfaser (LL), an deren Enden jeweils ein Optokoppler (OK) vorgesehen ist, mit der elektronischen Auswerteeinrichtung (EA) verbunden ist.

10. Füllstandmeßgerät nach Anspruch 8,
**dadurch gekennzeichnet**, dass der Meßwertwandler (MW) über eine kapazitive oder induktive Übertragungseinrichtung mit der elektronischen Auswerteeinrichtung (EA) verbunden ist.

11. Füllstandmeßgerät nach Anspruch 8, 9 oder 10,
**dadurch gekennzeichnet**, dass im Meßwertwandler (MW) ein erster nichtflüchtiger Speicher (Sl) und in der elektronischen Auswerteeinrichtung (EA) ein zweiter nichtflüchtiger Speicher (S2) vorgesehen sind und dass in den beiden nichtflüchtigen Speichern (S1, S2) dieselben Parametrierdaten redundant gespeichert sind.

12. Füllstandmeßgerät nach Anspruch 11,
**dadurch gekennzeichnet**, dass bei Austausch des Meßwertwandlers (MW) die im zweiten nichtflüchtigen Speicher (S2) der elektronischen Auswerteeinrichtung (EA) gespeicherten Daten in den ersten nichtflüchtigen Speicher (S1) des neu eingesetzten Meßwertwandlers (MW) übertragbar sind.

13. Füllstandmeßgerät nach Anspruch 10 oder 11,
**dadurch gekennzeichnet**, dass bei Austausch der elektronischen Auswerteeinrichtung (EA) die im ersten nichtflüchtigen Speicher (S1) des Meßwertwandlers (MW) gespeicherten Daten in den zweiten nichtflüchtigen Speicher (S2) der neu eingesetzten elektronischen Auswerteeinrichtung (EA) übertragbar sind.
